# EUROPEAN PATENT SPECIFICATION

(11) **EP 1 940 578 B1**
(45) Date of publication and mention of the grant of the patent: **24.05.2017**
(21) Application number: 06794077.5
(22) Date of filing: 08.09.2006
(51) Int. Cl.: B23K 9/09

(54) **Method for short-arc welding**
Verfahren zum Schweissen mit kurzem Lichtbogen
Procédé de soudage a l'arc court

(30) Priority: 08.09.2005 FI 20050896
(43) Date of publication of application: 09.07.2008
(73) Proprietor: Kemppi Oy, 15801 Lahti (FI)
(72) Inventor: HÄMÄLÄINEN, Pauli, FI-15840 Lahti (FI); ELONIEMI, Esa, FI-15870 Hollola (FI); JÄRVINEN, Olli, 04500 Kellokoski (FI)
(74) Representative: Seppo Laine Oy
(86) International application number: PCT/FI2006/000300
(87) International publication number: WO 2007/028858

(56) References cited:
- EP-A2- 1 410 867
- EP-A2- 1 410 867
- US-A- 5 726 419
- US-A- 5 726 419

## Description

The present invention relates to a method, according to the preamble of Claim 1, for short-arc welding.

EP patent 0 324 960 discloses a method and apparatus for short-arc welding, in which method the welding is implemented by current cycles that follow each other between the welding wire and the base material. In the current cycles, the short-circuit and arc stages alternate with each other, so that in the short-circuit stage a molten droplet is transferred from the welding wire to the base material, and during the arc stage following the short- circuit stage the next droplet is formed for transfer to the base material during the following short-circuit stage. In the patent, after the short-circuit response, the arc stage includes a high-current pulse, which typically has a lower current than the short-circuit current response. At other times, a low base current prevails, which is formed using inductive current limiting. Such a welding cycle is typically repeated at a frequency of
10-200 Hz.

A particular drawback with this solution is the inductively implemented low base current, for which there are limited possibilities for control. In the solution, the base current cannot be altered/controlled during the welding cycle. This significantly weakens the welding result, especially with demanding materials.

Using the circuit solution disclosed, the control of the other pulse parameters too is restricted so that in special conditions the welding result may remain poor. EP 1 410 867 discloses a short-arc welding method according to the preamble of claim 1. In order to work, the solution disclosed requires a droplet of filler material to detect pinching and for an additional connection for the rapid pull-down of current at the end of the short-circuit cycle. These additional connections make the apparatus more complex and are liable to malfunction. The measuring leads that must be connected to the workpiece cause additional work for the operator.

The invention is intended to eliminate the defects of the state of the art disclosed above and for this purpose create an entirely new type of method and apparatus for short-arc welding.

The invention is based on each current cycle being formed with the aid of actively adjusted parameters, thus allowing the total pulse shape to be regulated in detail.The end part of the short-circuit stage is implemented using a variable current, without measuring the pinching moment of the droplet of filler material.

Considerable advantages are gained with the aid of the invention. The use of multi-parameter control achieves precise adjustment of the welding event for different materials and shielding gases. The fact that the pinching moment of the filler-metal droplet is not measured eliminates one possible source of error in the welding event. By means of a controlled variable-current termination of the short-circuit cycle, it is possible to minimize spattering caused by a falling molten droplet.

In one preferred embodiment of the invention, by selecting the correct current pulse during the short circuit and the values of the other parameters of the method with the aid of synergy, which is based on the size of the wire feed, the material to be welded, the filler material, and the shielding gas, it is achieved to make the short circuit cut the current during the rundown. Thus the following advantages, among others, can be achieved.

Real-time data measured prior to the welding process, such as measurements of the short-circuit cycle duration, or of the length of the arc cycle, can be used to stabilize the welding process and thus to fine-tune the multi-parameter control parameters used for control.

The advantages achieved by means of preferred embodiments of the invention are: non-spattering, a reduction in heat production, better control of the weld puddle and root penetration, and a higher welding speed, compared to the normal short-arc process.

The technology is simple compared to known solutions. There is no need for complicated and disturbance-prone electronics, which measure pinching with the aid of cables connected to the workpiece. In addition, there is no need for rapid current rundown switching.

In the following, the invention is examined with the aid of examples and with reference to the accompanying drawings.
Figure 1 shows one pulse form according to the invention during the duration of a single welding cycle.
Figures 2a - 2d shows schematic side views of different stages in the detaching of a filler droplet from the welding wire.
Figure 3 shows a side view of an ideal droplet moving from the weld puddle in the method according to the invention.
Figure 4 shows a side view of the arc stage after the short circuit, in the method according to the invention.

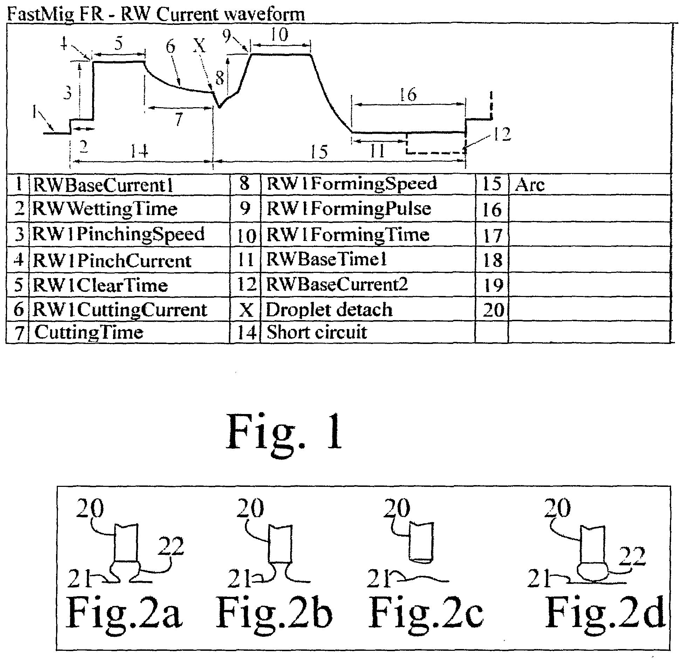

According to Figure 1, in the invention the current and voltage waveforms and the parameters affecting them are optimized by means of the software of the welding power supply, in order to optimize the short-arc short circuit and the arc stage generating it. This gives the theoretical current curve according to the figure for the welding of the root run. Thanks to the new current curve shape, it is possible to refer to a pulsed short arc.

The operation of the new current curve was designed with the aid of theory and experiments, and a specific zone of operation in the new pulsed short-arc welding process was prepared for each parameter.

The short-arc process according to the invention is well suitable for root-run welding. In the welding process, the focus was on forming digitally the current and voltage curves coming from the power supply. In the root-run welding waveform that was developed, the short circuit is expected to start between the filler-metal wire and the workpiece, during the arc stage. Once the short circuit starts, the current is first of all increased, held at this level for a time determined by the material and wire-feed speed of the welding situation, and then after that reduced to a lower level. The droplet pinches free from the end of the filler-metal wire and transfers to the weld puddle while the current is at the lower level.

Once the filler-metal wire is detached from the end of the filler-metal wire, the welding process moves to the arc stage. At the beginning of this stage, the voltage rises as the arc lights up. Due to the slowness of adjustment of the welding power supply, its initial power can be altered at a limited speed. This means that, when the voltage increases, the current first of all drops to a level lower than the level preceding the arc stage. After a delay due to the slowness of the welding power supply, the power of the arc is increased at the desired speed to the desired level, whereby the filler-metal droplet that has already transferred to the weld puddle and the weld puddle deforms to create the desired root penetration.

By using a selected optimal shape of the current curve, the detachment of the droplet and its transfer to the molten weld pool are made spatter-free.

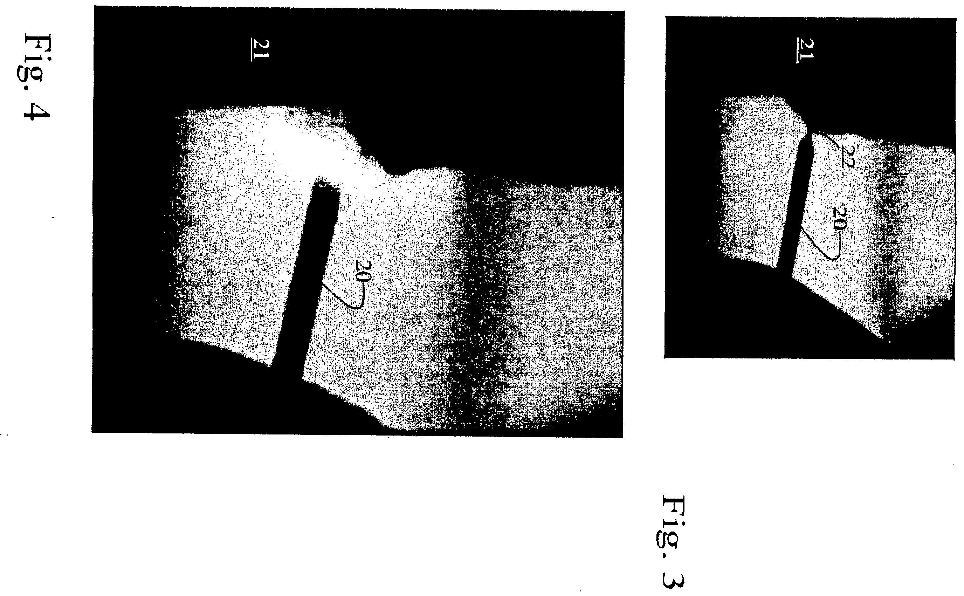

In the development work, twelve parameters were used to shape the current curve. Each parameter affected for its part the behaviour of the arc during welding. In addition to this, the short-circuit duration 14 and the arc duration 15, which in this document is also referred to as the light arc duration, are marked in Figure 1. Figure 1 is examined in connection with Figures 2a- 2d, which concretely illustrate the detaching of the droplet 22 from the welding wire 20 to the base material 21. Figure 2a shows the situation at precisely the start of the short-circuit stage 14, when the molten droplet 22 forms a short circuit with the weld puddle in the base material 21. InFigure 2b, the situation is at the end stage of the short-circuit stage 14, and in Figure 2c the arc stage 15 has just started. Figure 2d in turn shows the end of the arc stage 15, immediately before the droplet 22 short circuits with the base material 21, when in the low-current phase 16 of the arc stage 15. Each parameter 1...12:a of Figure 1 is altered to make the welding-arc ideal. At the level of the base current (RWBaseCurrentl) 1 the heat of the base material 21 can be increased or decreased between the short circuits 14. The base current 1 is thus an adjustable parameter, which can be set to the desired level. The RWWettingTime 2 defines the time for the capture of the filler-metal droplet 22 before the current is increased. Figure 2a is located in this period. During the short circuit 14, the transfer of the filler-metal droplet 22 from the end of the filler-metal wire to the weld puddle is defined with the aid of the Lorentz, i.e. pinch force. The parameters 3...6 are used for this. The ideal Lorentz force can be clearly seen in Figure 3. The RWIClearTime 5 defines the time, for which the current is at the level 4. The RWlPinchCurrent current level 4, and its duration during the RWIClearTime 5 is given such a large current level that a part of the filler material will be able to transfer to the weld puddle and the pinch force will be able to start to take effect. The RW1 CuttingCurrent 6 gives the level, to which the current drops after the current is increased. During this portion, an attempt is made to transfer the filler-metal droplet to the weld puddle. Figure 2b is located in this period and Figure 2c shows the moment immediately after pinching. In the method, the pinching of the droplet 22 is expected during stage 7. There is no attempt to detect pinching of the droplet 22 by measuring the voltage during the short circuit, as is done in known processes. The droplet 22 can transfer to the base material 21 before the current level RW1CuttingCurrent 6, or when the current level reaches it. The dropping waveform of the current can be linear, exponential according to the figure, or a combination of these, always according to the control and its related power circuit. The current can thus be directed to this level 6. In this case, the current is not reduced immediately, but instead the pinching detachment of the droplet 22 is expected during the period CuttingTime 7. The termination of the short circuit is detected with the aid of the rapid increase in voltage.

Figure 3 is a photograph showing the transfer of an ideal droplet 22 to the weld puddle from the effect of forces taking place in the process. In the case of the figure, the base material was EN 14301/AISI 304, the filler material EN 12072-22 G19 123LSi (1.0 mm), the shielding gas 69.5 % Ar + 30 %He+ 0.5 % CO2, and the welding position PG.

After the transfer of the filler-metal droplet 22, the short circuit terminates and the welding arc lights up again, after which the arc is shaped using the pulse-like shape of the current. This is called a shaping pulse. With the aid of the shaping pulse (parameters 8...10), the filler-metal droplet 22 is pushed into the weld puddle, well mixed with it, and thus forms the necessary penetration into the root run.

The RW1FormingSpeed 8 defining the speed of increase in current and the RW1FormingCurrent 9 defining the current level bring energy to boost the arc that develops. The RW1FormingTime 10 defines the time for the pulse-like welding arc, i.e. the shaping pulse. By altering the parameters 8...10, it is possible to influence the welding arc and thus the behaviour of the material 21 being welded as well as of the filler-metal wire 20 during welding.

The pulse-like current in Figure 4 forms a soft arc, compared to a normal short arc. As the air gap increases, these parameters are altered to widen the welding arc, thus allowing the weld puddle to be controlled more easily. When the air gap decreases, the parameters are altered to create a more concentrated arc.

During the low-current period 16, an excessive increase in the filler-metal droplet at the end of the filler-metal wire can be prevented by further reducing the base-current level 1 to the desired level RWBaseCurrent2 12, after a set time RWBaseTime1 11. This portion only takes place if the duration of the low-current period exceeds a set limit 11.

In Figure 4, after the lighting of the arc a shaping pulse pushes the weld puddle without transferring filler material and without causing spattering, the base material being EN 14301/AISI 304, the filler material EN 12072-22 G19 123LSi (1.0 mm), the shielding gas 69.5 % Ar + 30 % He + 0.5 % CO₂, and the welding position PG.

## Claims

1. Short-arc welding method, in which method
- an electrically periodically changing arc, which is short-circuited periodically by a molten droplet (22) from the welding wire (20), is formed between the welding wire (20) and the base material (21), whereby
- each welding cycle is formed of a short-circuit stage (14) and an arc stage (15),whereby both the short-circuit (14) and the arc (15) stages include both a high-current pulse (5, 10) and lower-current periods (2, 7, 12, 16),
- parameters (2, 3, 4, 5, 6) of the end part of the short-circuit stage are defined before the start of the short-circuit stage (14), on the basis of the material, shielding gas, and wire-feed speed, **characterized in that**
- based on the parameters at the end part of each short-circuit stage (14) a falling current shape (6, 7) is formed, during which period the pinching of the droplet (22) is expected without any attempt to detect pinching of the droplet (22).

2. Method according to Claim 1, **characterized in that** the initial part of the short-circuit response is a high-current pulse, which brings a significant part of the energy required to detach the filler-metal droplet (22).

3. Method according to Claim 1, **characterized in that** the depinching of the filler-metal droplet (22) takes place at a current level sufficiently low to achieve non-spattering.

4. Method according to any of the above claims, **characterized in that** the length of the short-circuit stage (14) is measured, and the measurement data is used to adjust the parameters (1, 2, 3, 4, 5, 6, 8, 9, 10, 11, 12) of the following arc and short-circuit stages.

5. Method according to any of the above Claims, **characterized in that** the length of the short-circuit stage (14) is measured, and the measurement data is used to adjust the parameters (1,2, 3, 4, 5, 6, 8, 9, 10, 11, 12) of the following arc and short-circuit stages.

6. Method according to any of the above Claims, **characterized in that** at the start of the arc stage (15) the weld puddle is shaped (8, 9, 10) using a pulse-like current.

7. Method according to any of the above Claims, **characterized in that** at the start of the arc stage (15) the arc is shaped using a multi-parameter (8, 9, 10) pulse-like current.

## Patentansprüche

1. Kurzlichtbogenschweißverfahren, wobei in diesem Verfahren
- ein elektrisch periodisch wechselnder Lichtbogen, der durch einen geschmolzenen Tropfen (22) vom Schweißdraht (20) periodisch kurzgeschlossen wird, zwischen dem Schweißdraht (20) und dem Grundmaterial (21) ausgebildet wird, wodurch
- jeder Schweißzyklus aus einer Kurzschlussphase (14) und einer Lichtbogenphase (15) gebildet wird, wodurch sowohl die Kurzschluss- (14) als auch die Lichtbogenphase (15) einen hochstromigen Impuls (5, 10) und niederstromige Perioden (2, 7, 12, 16) beinhalten,
- Parameter (2, 3, 4, 5, 6) des Endabschnitts der Kurzschlussphase vor dem Beginn der Kurzschlussphase (14) auf Grundlage des Materials, des Schutzgases und der Drahtvorschubgeschwindigkeit festgelegt werden,
**dadurch gekennzeichnet, dass** s
- auf Grundlage der Parameter am Endabschnitt jeder Kurzschlussphase (14) eine fallende Stromform (6, 7) gebildet wird, wobei während dieser Periode die Abschnürung des Tropfens (22) ohne einen Versuch zur Detektierung der Abschnürung des Tropfens (22) erwartet wird.

2. Verfahren nach Anspruch 1, **dadurch gekennzeichnet, dass** der Anfangsabschnitt der Kurzschlussantwort ein hochstromiger Impuls ist, der einen erheblichen Teil der für die Ablösung des Zusatzmetalltropfens (22) erforderlichen Energie aufbringt.

3. Verfahren nach Anspruch 1, **dadurch gekennzeichnet, dass** die Abschnürung des Zusatzmetalltropfens (22) bei einer Stromstärke stattfindet, die ausreichend niedrig ist, um Spritzerfreiheit zu erzielen.

4. Verfahren nach einem der vorstehenden Ansprüche, **dadurch gekennzeichnet, dass** die Länge der Kurzschlussphase (14) gemessen wird und die Messdaten verwendet werden, um die Parameter (1, 2, 3, 4, 5, 6, 8, 9, 10, 11, 12) der folgenden Lichtbogen- und Kurzschlussphase zu verstellen.

5. Verfahren nach einem der vorstehenden Ansprüche, **dadurch gekennzeichnet, dass** die Länge der Kurzschlussphase (14) gemessen wird und die Messdaten verwendet werden, um die Parameter (1, 2, 3, 4, 5, 6, 8, 9, 10, 11, 12) der folgenden Lichtbogen- und Kurzschlussphase zu verstellen.

6. Verfahren nach einem der vorstehenden Ansprüche, **dadurch gekennzeichnet, dass** am Anfang der Lichtbogenphase (15) das Schweißbad mit Hilfe eines impulsartigen Stroms ausgeformt (8, 9, 10) wird.

7. Verfahren nach einem der vorstehenden Ansprüche, **dadurch gekennzeichnet, dass** am Anfang der Lichtbogenphase (15) der Lichtbogen mit Hilfe eines multiparametralen (8, 9, 10) impulsartigen Stroms ausgeformt wird.

## Revendications

1. Procédé de soudage à l'arc court dans lequel
- un arc soumis à une modification électrique périodique, qui est court-circuité périodiquement par une goutte fondue (22) depuis le fil d'apport (20), est formé entre le fil d'apport (20) et la matière de base (21), par quoi
- chaque cycle de soudage est constitué d'une phase de court-circuit (14) et d'une phase d'arc (15), par quoi tant la phase de court-circuit (14) que la phase d'arc (15) comprennent une pulsation à courant élevé (5, 10) et une pulsation à faible courant (2, 7, 12, 16),
- des paramètres (2, 3, 4, 5, 6) de la partie finale de la phase de court-circuit sont définis avant le début de la phase de court-circuit (14) sur la base de la matière, du gaz inerte et de la vitesse d'avancement du fil,
**caractérisé en ce que**
- un courant de forme descendante (6, 7) est formé sur la base des paramètres à la partie finale de chaque phase de court-circuit (14), le pincement de la goutte (22) étant attendu pendant ladite période sans aucune tentative de détecter le pincement de la goutte (22).

2. Procédé selon la revendication 1, **caractérisé en ce que** la partie initiale de la réponse de court-circuit est une impulsion de fort courant qui apporte une partie considérable de l'énergie requise pour le détachement de la goutte de métal d'apport (22).

3. Procédé selon la revendication 1, **caractérisé en ce que** le pincement de la goutte de métal d'apport (22) a lieu à un niveau de courant suffisamment faible pour assurer l'absence de projections.

4. Procédé selon l'une des revendications précédentes, **caractérisé en ce que** la longueur de la phase de court-circuit (14) est mesurée et que les données mesurées sont utilisées pour ajuster les paramètres (1, 2, 3, 4, 5, 6, 8, 9, 10, 11, 12) des phases d'arc et de court-circuit suivantes.

5. Procédé selon l'une des revendications précédentes, **caractérisé en ce que** la longueur de la phase de court-circuit (14) est mesurée et que les données mesurées sont utilisées pour ajuster les paramètres (1, 2, 3, 4, 5, 6, 8, 9, 10, 11, 12) des phases d'arc et de court-circuit suivantes.

6. Procédé selon l'une des revendications précédentes, **caractérisé en ce que** le bain de fusion est mis en forme (8, 9, 10) à l'aide d'un courant de type impulsionnel au début de la phase d'arc (15).

7. Procédé selon l'une des revendications précédentes, **caractérisé en ce que** l'arc est mis en forme à l'aide d'un courant multiparamétrique (8, 9, 10) de type impulsionnel au début de la phase d'arc (15).
